# EUROPEAN PATENT SPECIFICATION

(11) **EP 2 686 723 B1**
(45) Date of publication and mention of the grant of the patent: **21.09.2016**
(21) Application number: 12716674.2
(22) Date of filing: 15.03.2012
(51) Int. Cl.: G02B 6/38, G02B 6/44

(54) **PROTECTOR FOR OPTICAL FIBER AND PROTECTIVE STRUCTURE**
SCHUTZVORRICHTUNG FÜR OPTISCHE FASER UND SCHUTZSTRUKTUR
PROTECTEUR POUR FIBRE OPTIQUE ET STRUCTURE PROTECTRICE

(30) Priority: 16.03.2011 JP 2011058081
(43) Date of publication of application: 22.01.2014
(73) Proprietor: Yazaki Corporation, Tokyo 108-0073 (JP)
(72) Inventor: IKEDA, Yukiyoshi, Susono-shi, Shizuoka 410-1107 (JP)
(74) Representative: Grünecker Patent- und Rechtsanwälte PartG mbB
(86) International application number: PCT/JP2012/001808
(87) International publication number: WO 2012/124335

(56) References cited:
- EP-A1- 0 803 750
- EP-A1- 1 074 868
- EP-A2- 0 213 672
- US-A- 5 157 749
- US-A1- 2001 043 775

## Description

### Technical Field

The present invention relates to a protector for optical fiber to be used to protect an optical fiber and a protective structure for optical fiber using the same.

### Background Art

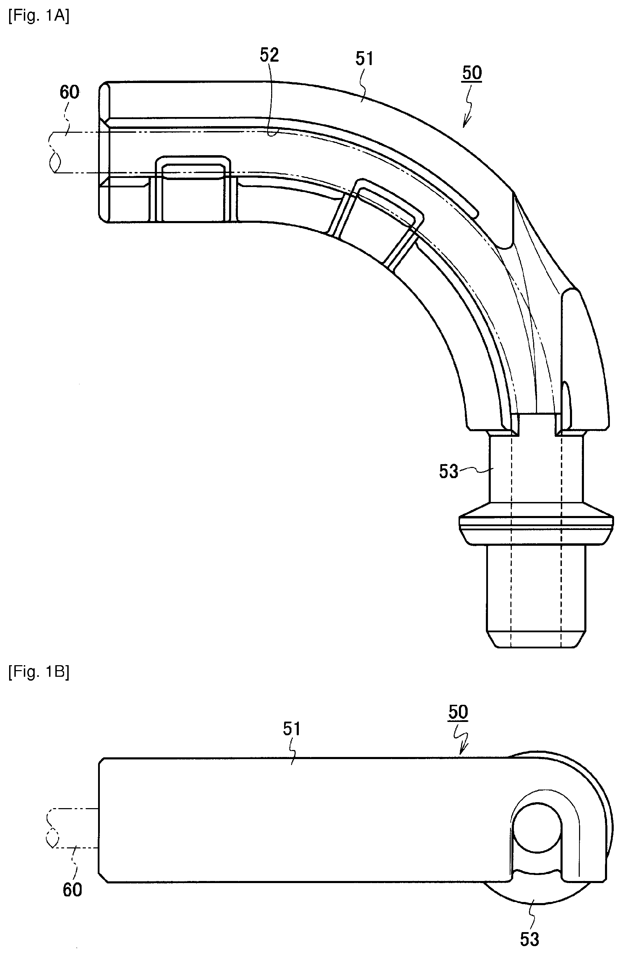

There have been proposed various protectors for optical fibers each of which is used to protect an optical fiber (see Patent documents 1 to 3). There are many cases where a protector for optical fiber is arranged in the vicinity of an optical connector or the like. In this situation, a protector for optical fiber with ferrule has been proposed (see Patent document1). A conventional example of the protector for optical fiber with ferrule is shown in FIGS. 1A and 1B.

In FIGS. 1A and 1B, a protector for optical fiber 50 includes a protector main body 51 having a fiber receiving passage 52, and a ferrule 53 integrally mounted to the protector main body 51. A portion of an optical fiber 60 is received in the fiber receiving passage 52 in a curved shape. An end of the optical fiber 60 is connected to the ferrule 53.

In the conventional example, the optical fiber 60 is mounted in the protector for optical fiber 50 by connecting the end of the optical fiber 60 to the ferrule 53 by laser welding or the like and then receiving the optical fiber 60 in the fiber receiving passage 52. Since the ferrule 53 is integrally mounted to the protector main body 51, there is an advantage that it is not necessary to adjust a position of the ferrule 53 with respect to the protector main body 51 such that they have a certain positional relation.

### Citation List

### Patent Literature

[PTL1] Japanese Patent Application Laid-Open Publication No. 2003-149504
[PTL2] Japanese Patent Application Laid-Open Publication No. 2001-249253
[PTL3] Japanese Patent Application Laid-Open Publication No. 2008-43056

### Summary of Invention

### Technical Problem

The protector for optical fiber 50 however has the following problem. The ferrule 53 is an important portion of the protector for optical fiber 50 where an optical connection is carried out, which requires a high accuracy of dimension. This needs to produce the protector main body 51 in accordance with the accuracy of dimension of the ferrule 53. As the result, the protector for optical fiber 50 is a high price product as a whole.

The ferrule 53 is further required to have characteristics suitable for a connection means (e.g., laser welding) to be used to connect the ferrule 53 to the optical fiber 60. On the other hand, in a case of forcibly bending the optical fiber 60, the protector main body 51 is required to have strength sufficient to resist reaction force from the optical fiber 60. Thus, the required material characteristics of the ferrule 53 differ from the required material characteristics of the protector main body 51.

If the ferrule 53 and the protector for optical fiber 50 are independently produced as separated members, the production cost of the protector for optical fiber 50 is reduced as a whole. This however needs to adjust a position of the ferrule 53 with respect to the protector for optical fiber 50 such that they have a certain positional relation, which brings a new problem that the ferrule 53 is not easily mounted to the protector for optical fiber 50 in the certain positional relation.

Hence, the present invention is made to resolve the above-described problem, an object of the present invention is to provide a protector for optical fiber in which a ferrule and the protector for optical fiber are separated members and the ferrule is easily mounted to the protector for optical fiber in a certain positional relation, and a protective structure for optical fiber using the same.

US 2001/0043775 A1 discloses an optical protector according to the preamble of claim 1.

### Solution to Problem

The present invention provides a protector for optical fiber according to claim 1 and a protective optical structure according to claim 6.

It is preferable that the ferrule to be held in the ferrule holding portion includes a ferrule main body and a flange that protrudes from the ferrule main body, and the ferrule holding portion includes a main body receiving groove that receives the ferrule main body and a flange receiving groove that receives the flange.

It is preferable that the protector main body includes a fiber drop-off preventing portion that prevents the optical fiber from dropping-off the fiber receiving passage.

It is preferable that the reinforcing portion is installed to a bending side wall on which the fiber drop-off preventing portion is installed to the inner circumference side bending side wall.

It is preferable that a protrusion for fiber direction correction is installed on a distal end of the outer circumference side bending side wall to protrude toward the fiber receiving passage.

### Advantageous Effects of Invention

According to the present invention, when a ferrule is held in the ferrule holding portion, the ferrule is mounted to the protector for optical fiber in a certain positional relation. Therefore, the ferrule is easily mounted to the protector for optical fiber in the certain positional relation.

### Brief Description of Drawings

[fig.1A]FIG. 1A is a plan view of a conventional protector for optical fiber.
[fig.1B]FIG. 1B is a back view of the conventional protector for optical fiber.
[fig.2]FIG. 2 is a plane view of a protector for optical fiber according to an exemplary embodiment of the present invention.
[fig.3]FIG. 3 is a right side view of the protector for optical fiber according to the exemplary embodiment of the present invention.
[fig.4]FIG. 4 is a back view of the protector for optical fiber according to the exemplary embodiment of the present invention.
[fig.5]FIG. 5 is a cross-section view of the protector for optical fiber along the line A-A in FIG. 2.

### Description of Embodiments

An exemplary embodiment of the present invention will be described below with reference to accompanying drawings.

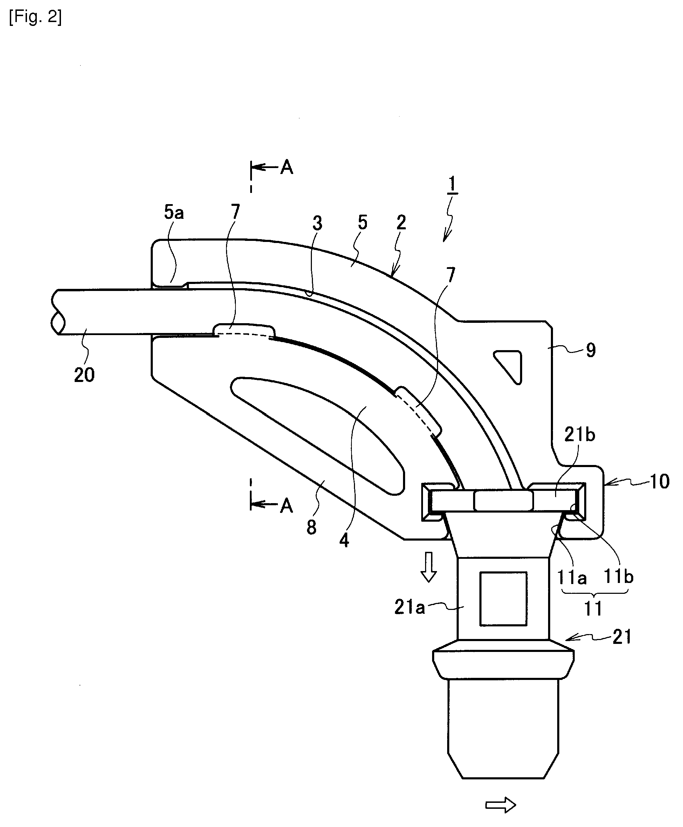

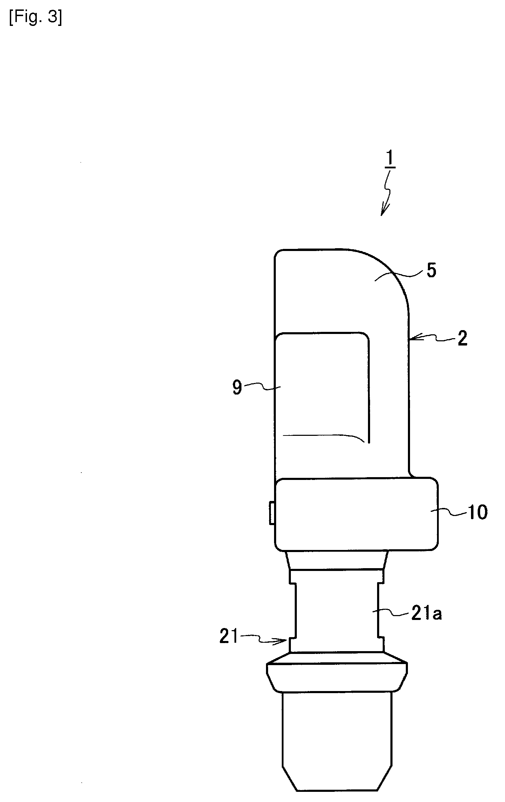

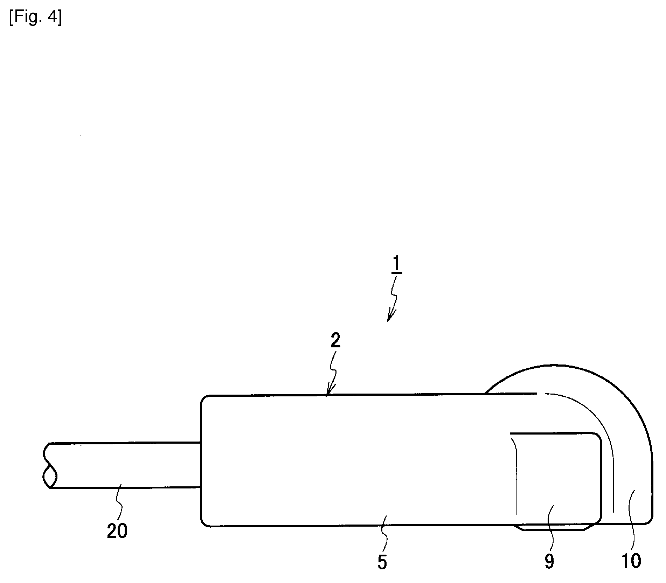

FIGS. 2 to 5 illustrate the exemplary embodiment of the present invention. As shown in FIGS. 2 to 4, a protector for optical fiber 1 is made of a synthetic resin, for example. The protector for optical fiber 1 includes a protector main body 2 that receives an optical fiber 20 along a certain routing path and protects it, and a ferrule holding portion 10 that is integrally mounted to the protector main body 2 and holds a ferrule 21 connected to an end of the optical fiber 20.

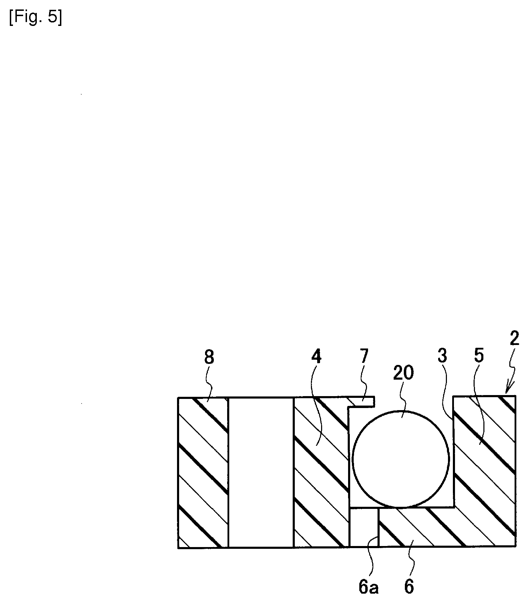

The protector main body 2 includes a fiber receiving passage 3. The fiber receiving passage 3 is curved such that a direction of the optical fiber 20 at one end of the fiber receiving passage 3 intersects with a direction of the optical fiber 20 at the other end of the fiber receiving passage 3 at a 90-degree angle. The fiber receiving passage 3 is defined by an inner circumference side bending side wall 4, an outer circumference side bending side wall 5 and a bottom surface wall 6 (see FIG. 5), and opens at a top surface side thereof. At the open side of the fiber receiving passage 3, two engagement protrusions 7 and 7 each of which is a fiber drop-off preventing portion are installed in a protruding manner on the inner circumference side bending side wall 4 at a suitable interval. A protrusion dimension of each engagement protrusion 7 is set to a dimension that allows the optical fiber 20 to be received in the fiber receiving passage 3 by pushing the optical fiber 20 and prevents the optical fiber 20 received in the fiber receiving passage 3 from dropping off the fiber receiving passage 3 by itself.

A reinforcing beam 8 which is a reinforcing portion is installed to the inner circumference side bending side wall 4. The reinforcing beam 8 links one end with the other end of the inner circumference side bending side wall 4. One end of the reinforcing beam 8 links to the ferrule holding portion 10. The reinforcing beam 8 is formed into a substantially straight beam shape.

A reinforcing beam 9 which is a reinforcing portion is installed to the outer circumference side bending side wall 5. The reinforcing beam 9 is formed into an L-shape.

A protrusion for fiber direction correction 5a which protrudes toward the fiber receiving passage 3 is installed on the outer circumference side bending side wall 5 at a distal end of the outer circumference side bending side wall 5.

The ferrule holding portion 10 opens to one end of the fiber receiving passage 3 and has a ferrule holding groove 11 to be used to receive and hold the ferrule 21. The ferrule 21 includes a ferrule main body 21a and a flange 21b that protrudes laterally from the ferrule main body 21a. The ferrule holding groove 11 includes a main body receiving groove 11a that receives a portion of the ferrule main body 21a and a flange receiving groove 11b that receives the flange 21b.

Next, a work for mounting the optical fiber 20 and the ferrule 21 in the protector for optical fiber 1 will be described. First, the end of the optical fiber 20 is connected to the ferrule 21 by laser welding or the like (process for connecting fiber to ferrule). Next, the ferrule 21 is received in the ferrule holding groove 11 and the optical fiber 20 is received in the fiber receiving passage 3 while being bent (process for setting fiber and ferrule). Thereafter, the work is finished. The process for setting fiber and ferrule may be carried out before the process for connecting fiber to ferrule. More specifically, after the ferrule 21 is received in the ferrule holding groove 11 and the optical fiber 20 is received in the fiber receiving passage 3 while being bent, the end of the optical fiber 20 is connected to the ferrule 21 by laser welding or the like.

As described above, the protector for optical fiber 1 includes the protector main body 2 that has the fiber receiving passage 3 receiving the optical fiber 20, and the ferrule holding portion 10 that is integrally mounted to the protector main body 2 and holds the ferrule 21. Therefore, since the ferrule 21 can be held in the ferrule holding portion 10 of the protector for optical fiber 1, the ferrule 21 is easily mounted to the protector for optical fiber 1 in a certain positional relation.

Since the protector for optical fiber 1 and the ferrule 21 are separated members, materials suitable for respective required characteristics can be independently adopted as materials of the protector for optical fiber 1 and the ferrule 21. This realizes a low cost as a whole. Since the protector for optical fiber 1 and the ferrule 21 are independently produced according to a user request (e.g., configuration), the user request can be realized at a low cost as a whole.

The ferrule 21 to be held in the ferrule holding portion 10 includes the ferrule main body 21a and the flange 21b that protrudes from the ferrule main body 21a. The ferrule holding portion 10 includes the main body receiving groove 11a that receives the ferrule main body 21a and the flange receiving groove 11b that receives the flange 21b. Therefore, even if bending reaction force acts on the ferrule 21, the ferrule 21 can be steadily held. More specifically, when reaction force acts on the ferrule 21 in a direction of arrow shown in FIG. 2, the reaction force is concentrated on the flange 21b of the ferrule 21 and a side surface of the flange receiving groove 11b. As the result, the reaction force is certainly received by these members.

The protector main body 2 includes the engagement protrusions 7 and 7 that prevents the optical fiber 20 from dropping off the fiber receiving passage 3. This prevents the optical fiber 20 having been received in the fiber receiving passage 3 from dropping off the fiber receiving passage 3.

The fiber receiving passage 3 is defined by the inner circumference side bending side wall 4, the outer circumference side bending side wall 5 and the bottom surface wall 6. The reinforcing beams 8 and 9 are respectively installed to the inner circumference side bending side wall 4 and the outer circumference side bending side wall 5. This certainly prevents the inner circumference side bending side wall 4 and the outer circumference side bending side wall 5 from being deformed or broken by bending reaction force from the optical fiber 20.

As a modified example, either the reinforcing beams 8 or 9 may be omitted. In this case, it is preferable to leave a reinforcing beam at a side of bending side wall on which the engagement protrusions 7 and 7 are installed, from among the inner circircumference side bending side wall 4 and the outer circumference side bending side wall 5. In a case where the protector for optical fiber 1 is made by metal molding, if the engagement protrusions 7 and 7 are installed on the inner circumference side bending side wall 4, a clearance hole for engagement protrusion molding 6a is formed on the bottom surface wall 6 at a side of the inner circumference side bending side wall 4. This reduces strength of the inner circumference side bending side wall 4. The reinforcing beam 8 prevents the strength of bending side wall on which the engagement protrusions 7 and 7 are installed from being reduced.

The reinforcing beam 8 links one end with the other end of the inner circumference side bending side wall 4, and one end of the reinforcing beam 8 links to the ferrule holding portion 10. Thus, the reinforcing beam 8 reinforces the inner circumference side bending side wall 4 and the ferrule holding portion 10. The reinforcing beam 8 increases the strength of the inner circumference side bending side wall 4 and strength of the ferrule holding portion 10. This certainly prevents the ferrule holding portion 10 from being deformed or broken by bending reaction force from the optical fiber 20.

The protrusion for fiber direction correction 5a which protrudes toward the fiber receiving passage 3 is installed on the outer circumference side bending side wall 5 at the distal end of the outer circumference side bending side wall 5. This allows the optical fiber 20 to be drawn from the fiber receiving passage 3 toward a desired direction certainly. A width dimension of the fiber receiving passage 3 is generally set to be slightly greater than one of the optical fiber 20. Under this configuration, the optical fiber 20 is drawn from the fiber receiving passage 3 toward a direction where bentness of the optical fiber 20 is reduced (toward a side of the outer circumference side bending side wall 5 with respect to the desired direction), due to bending restoring force corresponding to the difference between the width dimensions. The protrusion for fiber direction correction 5a can correct the wrong direction.

### Reference Signs List

- 1: protector for optical fiber

- 2: protector main body
- 3: fiber receiving passage
- 4: inner circumference side bending side wall
- 5: outer circumference side bending side wall
- 5a: protrusion for fiber direction correction
- 6: bottom surface wall
- 7: engagement protrusion (fiber drop-off preventing portion)
- 8, 9: reinforcing beam (reinforcing portion)
- 10: ferrule holding portion
- 11: ferrule holding groove
- 11a: main body receiving groove
- 11b: flange receiving groove
- 20: optical fiber
- 21: ferrule
- 21a: ferrule main body
- 21b: flange

## Claims

1. A protector for optical fiber (1) comprising:
a protector main body (2) that includes a fiber receiving passage (3) for receiving an optical fiber (20); and
a ferrule holding portion (10) that is integrally mounted to the protector main body (2) for holding a ferrule (21),
wherein the fiber receiving passage (3) is defined by an inner circumference side bending side wall (4), an outer circumference side bending side wall (5) and a bottom surface wall (6), **characterized in that**
a reinforcing portion (8) is installed to the inner circumference side bending side wall (4),
the reinforcing portion (8) links one end with the other end of the inner circumference side bending side wall (4), and
one end of the reinforcing portion (8) links to the ferrule holding portion (10).

2. The protector for optical fiber (1) according to claim 1,
wherein the ferrule (21) to be held in the ferrule holding portion (10) includes a ferrule main body (21 a) and a flange (21 b) that protrudes from the ferrule main body (21a), and
the ferrule holding portion (10) includes a main body receiving groove (11 a) that receives the ferrule main body (21 a) and a flange receiving groove (11b) that receives the flange (21 b).

3. The protector for optical fiber (1) according to claim 1, wherein the protector main body (2) includes a fiber drop-off preventing portion (7) that prevents the optical fiber (20) from dropping-off the fiber receiving passage (3).

4. The protector for optical fiber (1) according to claim 3, wherein the fiber drop-off preventing portion (7) is installed to the inner circumference side bending side wall (4).

5. The protector for optical fiber (1) according to claim 1, wherein a protrusion for fiber direction correction (5a) is installed on a distal end of the outer circumference side bending side wall (5) to protrude toward the fiber receiving passage (3).

6. A protective structure for optical fiber (20) comprising:
a ferrule (21) comprising:
a ferrule main body (21 a); and
a flange (21 b) that protrudes from the ferrule main body (21 a), and
a protector for optical fiber (1) according to claim 1;
the ferrule holding portion further including a main body receiving groove (11 a) and a flange receiving groove (11b);
the ferrule main body (21 a) being received in the main body receiving groove (11 a), and
the flange (21 b) being received in the flange receiving groove (11b).

## Patentansprüche

1. Schutzvorrichtung (1) für Lichtleitfaser, die umfasst:
einen Hauptkörper (2) der Schutzvorrichtung, der einen Faser-Aufnahmekanal (3) zum Aufnehmen einer Lichtleitfaser (20) enthält; und
einen Abschnitt (10) zum Halten einer Quetschhülse, der integral an dem Hauptkörper (2) der Schutzvorrichtung angebracht ist und eine Quetschhülse (21) hält,
wobei der Faser-Aufnahmekanal (3) durch eine Biegungs-Seitenwand (4) der Innenumfangsseite, eine Biegungs-Seitenwand (5) der Außenumfangsseite sowie eine Bodenflächen-Wand (6) gebildet wird, **dadurch gekennzeichnet, dass**
ein verstärkender Abschnitt (8) an der Biegungs-Seitenwand (4) der Innenumfangsseite installiert ist,
der verstärkende Abschnitt (8) ein Ende mit dem anderen Ende der Biegungs-Seitenwand (4) der Innenumfangsseite verbindet, und
ein Ende des verstärkenden Abschnitts (8) mit dem Abschnitt (10) zum Halten einer Quetschhülse verbunden ist.

2. Schutzvorrichtung (1) für Lichtleitfaser nach Anspruch 1,
wobei die Quetschhülse (21), die in dem Abschnitt (10) zum Halten einer Quetschhülse gehalten wird, einen Hauptkörper (21 a) der Quetschhülse sowie einen Flansch (21 b) enthält, der von dem Hauptkörper (21 a) der Quetschhülse vorsteht, und
der Abschnitt (10) zum Halten einer Quetschhülse eine Hauptkörper-Aufnahmenut (11a), die den Hauptkörper (21 a) der Quetschhülse aufnimmt, sowie eine Flansch-Aufnahmenut (11 b) einschließt, die den Flansch (21 b) aufnimmt.

3. Schutzvorrichtung (1) für Lichtleitfaser nach Anspruch 1, wobei der Hauptkörper (2) der Schutzvorrichtung einen Abschnitt (7) zum Verhindern von Herausfallen einer Faser einschließt, der verhindert, dass die Lichtleitfaser (20) aus dem Faser-Aufnahmekanal (3) herausfällt.

4. Schutzvorrichtung (1) für Lichtleitfaser nach Anspruch 3, wobei der Abschnitt (7) zum Verhindern von Herausfallen einer Faser an der Biegungs-Seitenwand (4) der Innenumfangsseite installiert ist.

5. Schutzvorrichtung (1) für Lichtleitfaser nach Anspruch 1, wobei ein Vorsprung (5a) für Korrektur einer Faser-Richtung an einem vorderen Ende der Biegungs-Seitenwand (5) der Außenumfangsseite so installiert ist, dass er auf den Faser-Aufnahmekanal (3) zu vorsteht.

6. Schutzstruktur für Lichtleitfaser (20), die umfasst:
eine Quetschhülse (21), die umfasst:
einen Hauptkörper (21 a) der Quetschhülse; und
einen Flansch (21 b), der von dem Hauptkörper (21 a) der Quetschhülse vorsteht, und
eine Schutzvorrichtung (1) für Lichtleitfaser nach Anspruch 1;
wobei der Abschnitt zum Halten einer Quetschhülse des Weiteren eine Hauptkörper-Aufnahmenut (11a) sowie eine Flansch-Aufnahmenut (11 b) einschließt;
der Hauptkörper (21 a) der Quetschhülse in der Hauptkörper-Aufnahmenut (11a) aufgenommen ist, und
der Flansch (21 b) in der Flansch-Aufnahmenut (11 b) aufgenommen ist.

## Revendications

1. Protecteur (1) pour fibre optique (20) comportant :
un corps principal du protecteur (2) qui inclut un passage de réception de fibre (3) pour recevoir une fibre optique (20) ; et
une partie de maintien de férule (10) qui est intégralement montée sur le corps principal du protecteur (2) pour maintenir la férule (21),
où le passage de réception de fibre (3) est défini par une paroi latérale courbe de circonférence intérieure (4), une paroi latérale courbe de circonférence extérieure (5) et une surface de fond (6), **caractérisé en ce qu'**
une partie de renforcement (8) est disposée au niveau de la paroi latérale courbe de circonférence intérieure (4),
la partie de renforcement (8) relie une extrémité avec l'autre extrémité de la paroi latérale courbe de circonférence intérieure (4), et
l'autre extrémité de la partie de renforcement (8) est reliée à la partie de maintien de férule (10).

2. Protecteur (1) pour fibre optique selon la revendication 1,
où la férule (21) destinée à être maintenue par la partie de maintien de férule (10) inclut un corps principal de férule (21a) et une bride (21b) qui fait saillie à partir du corps principal de férule (21a), et
la partie de maintien de férule (10) inclut un sillon de réception du corps principal (11a) qui reçoit le corps principal de la férule (21a) et un sillon de réception de la bride (11b) qui reçoit la bride (21b).

3. Protecteur (1) pour fibre optique selon la revendication 1, où le corps principal du protecteur (1) inclut une partie empêchant la sortie de la fibre (7) qui empêche la fibre optique (20) de sortir du passage de réception de fibre (3).

4. Protecteur (1) pour fibre optique selon la revendication 3, où la partie empêchant la sortie de la fibre (7) est disposée au niveau de la paroi latérale courbe de circonférence intérieure (4).

5. Protecteur (1) pour fibre optique selon la revendication 1, où une saillie de correction de la direction de la fibre optique (5a) est disposée à l'extrémité distale de la paroi latérale courbe de circonférence extérieure (5) de manière à faire saillie vers le passage de réception de fibre (3).

6. Structure protectrice pour fibre optique (20) comprenant :
une férule (21) comprenant :
un corps principal de férule (21a) ; et
une bride (21b) qui fait saillie à partir du corps principal de férule (21a), et
un protecteur (1) de fibre optique selon la revendication 1 ;
la partie de maintien de la férule comprenant en outre un sillon de réception du corps principal (1 la) et un sillon de réception de la bride (11b) ;
le corps principal de férule (21a) étant réceptionné dans le sillon de réception du corps principal (11a), et
la bride (21b) étant réceptionnée dans le sillon de réception de la bride (11b).
